# EUROPÄISCHE PATENTANMELDUNG

(11) **EP 2 154 473 A2**
(43) Veröffentlichungstag der Anmeldung: **17.02.2010**
(21) Anmeldenummer: 09165146.3
(22) Anmeldetag: 10.07.2009
(51) Int. Cl.: G01C 9/32

(54) **Neigungsdetektorvorrichtung mit geschlossenem optischen Pfad**

(30) Priorität: 06.08.2008 DE 102008041032
(71) Anmelder: HILTI Aktiengesellschaft, 9494 Schaan (LI)
(72) Erfinder: Ammann, Manfred, 6923, Lauterach (AT)

(57) **Zusammenfassung**

Eine Neigungsdetektorvorrichtung (N) weist eine Lichtquelle (1, 2), eine Lichtsensoreinrichtung (6) und eine zwischen der Lichtquelle (1, 2) und der Lichtsensoreinrichtung (6) angeordneten Libelle (5) auf. Weiterhin ist ein Lichtleiter (3) zwischen der Lichtquelle (1, 2) und der Libelle (5) angeordnet. Dabei ist die Lichtquelle (1, 2) mit dem Lichtleiter (3), der Lichtleiter (3) mit der Libelle (5) und die Libelle (5) mit der Lichtsensoreinrichtung (6) jeweils derart verbunden, dass Lichtquelle (1, 2), Lichtleiter (3), Libelle (5), und Lichtsensoreinrichtung (6) eine abgeschlossene Einheit bilden.

## Beschreibung

Die Erfindung betrifft eine Neigungsdetektorvorrichtung gemäß Patentanspruch 1, ein Präzisionsarbeitsgerät mit neigbar gelagerter Vorrichtung gemäß Patentanspruch 9 und ein Verfahren zur Herstellung einer Neigungsdetektorvorrichtung gemäß Patentanspruch 12.

Neigungsdetektorvorrichtungen sind Sensoren, welche eine Neigung mittels einer Neigungsgebers erkennen. Neigungsgeber kann eine Libelle mit einem mit einer Füllflüssigkeit und einer Gasblase gefüllten Hohlkörper sein. Solche Neigungsdetektorvorrichtungen werden verbreitert in Präzisionsarbeitsgeräten im Bauwesen und in der Vermessungstechnik verwendet.

Bekannt ist beispielsweise die Verwendung einer Neigungsdetektorvorrichtung mit Libelle und opto-elektronischer Abtastung der Position der Gasblase in einem Rotationsbaulaser. Hierbei werden Lichtquellen und Lichtsensoren derart an der Libelle angeordnet, dass eine Position der Gasblase durch die Lichtsensoren erfasst werden kann. Die Libelle ist dabei mit einer Vorrichtung des Arbeitsgeräts verbunden, so dass eine Neigung der Vorrichtung eine Lage der Gasblase beeinflusst. Die Lichtquellen und Lichtsensoren sind mechanisch unabhängig davon durch einen Träger gehalten. Zwischen den Lichtquellen und der Libelle sowie zwischen der Libelle und den Lichtsensoren entsteht daher ein Spalt.

Durch Verschmutzungen zwischen den Lichtquellen und der Libelle sowie zwischen der Libelle und den Lichtsensoren kann es daher zu Störungen des optischen Pfades kommen, welchen ein durch die Lichtquellen ausgesendetes und von den Lichtsensoren empfangenes Licht durchläuft. Dies kann die Abbildung der Gasblase der Libelle auf die Lichtsensoren derart nachteilig beeinflussen, dass Fehler bei der Erfassung der Neigung entstehen, welche die Erfassungsgenauigkeit der Neigungsdetektorvorrichtung stark beeinträchtigen können.

Um derartigen Störungen des optischen Pfades vorzubeugen, werden in der Fertigung solcher Neigungsdetektorvorrichtungen üblicherweise hohe Sauberkeits- und Qualitätsanforderungen gestellt, welche die Fertigung erschweren und verteuern.

Weiterhin müssen aufwändige Schutzvorrichtungen vorgesehen werden, die Verschmutzungen vermeiden und/oder es ist eine häufige Reinigung erforderlich.

Der Erfindung liegt die Aufgabe zugrunde, eine Neigungsdetektorvorrichtung anzugeben, die eine verminderte Empfindlichkeit gegen Verschmutzungen und Oberflächenabweichungen der optischen Komponenten aufweist, und die gleichzeitig einfach und kostengünstig gefertigt werden kann.

Diese Aufgabe wird durch eine Neigungsdetektorvorrichtung nach Anspruch 1 und durch ein Verfahren zur Herstellung einer Neigungsdetektorvorrichtung nach Anspruch 12 gelöst. Weiterentwicklungen der Erfindung sind den abhängigen Ansprüchen zu entnehmen.

Eine Neigungsdetektorvorrichtung gemäß der Erfindung weist eine Lichtquelle, eine Lichtsensoreinrichtung und eine Libelle, welche zwischen der Lichtquelle und der Lichtsensoreinrichtung angeordnet ist, auf. Weiterhin ist ein Lichtleiter zwischen der Lichtquelle und der Libelle angeordnet. Die Lichtquelle ist mit dem Lichtleiter, der Lichtleiter mit der Libelle und die Libelle mit der Lichtsensoreinrichtung jeweils derart miteinander verbunden, dass Lichtquelle, Lichtleiter, Libelle und Lichtsensoreinrichtung eine abgeschlossene Einheit bilden.

Anstelle einer Libelle kann auch eine andere Einrichtung verwendet werden, mittels welcher eine Lage oder Neigung im Raum bestimmt werden kann.

Ferner kann die Libelle ein Bauteil aufweisen, mit dem eine Lage oder Neigung im Raum bestimmt werden kann. Beispielsweise kann sie durch einen mit einer Füllflüssigkeit und einer Gasblase gefüllten Hohlkörper gebildet sein. Zur Erfassung der Neigung in einer räumlichen Dimension kann sie als Röhrenlibelle mit einem beispielsweise zylindrisch geformten Hohlkörper verwendet werden. Darüber hinaus kann auch eine an räumlich nach oben auszurichtende Oberseite des Hohlkörpers derart gewölbt sein, dass die Gasblase durch ihren Auftrieb immer an der höchsten Stelle im Raum schwimmt.

Die Lichtquelle kann ein oder mehrere Licht emittierende Bauteile wie beispielsweise Light Emitting Diodes (LEDs) zum Erzeugen von Licht beliebiger Wellenlängen aufweisen. Beispielsweise können zwei oder mehr LEDs als Lichtquelle entlang einer Längsachse der Libelle angeordnet sein, um die Position der Gasblase zu bestimmen.

Als Lichtsensoreinrichtung können Fotosensoren, Fotodioden oder Fotozeilen verwendet werden. Beispielsweise können ein oder mehrere Fotozeilen mit Fotosensoren entlang der Längsachse der Libelle angeordnet sein und so eine optische Abtastung der Position der Gasblase ermöglichen. So können eine Vielzahl, beispielsweise 60, lichtempfindliche Detektoren in einer Zeile angeordnet sein, die entlang der Längsachse der Libelle angeordnet sein können. Auf Basis des Verlaufs der Intensität des einfallenden Lichts entlang der Zeile kann die Position der Gasblase bestimmt werden. Eine elektronische Abtastung der Position der Gasblase ist ebenfalls möglich.

Zur Ausrichtung in zwei räumlichen Dimensionen können zwei Neigungsdetektorvorrichtungen verwendet werden, wobei die Längsachsen der Libellen der Neigungsdetektorvorrichtungen zueinander nicht parallel verlaufen.

Der zwischen der Lichtquelle und der Libelle angeordnete Lichtleiter kann aus einem beliebigen, im Wesentlichen transparenten Material bestehen, also aus einem Material, welches mit einem durch es hindurch geleiteten Licht im Wesentlichen nicht in Wechselwirkung tritt. Dies ermöglicht eine scharfe Abbildung bzw. Projektion der Libelle und der enthaltenen Gasblase auf die Lichtsensoreinrichtung. Der Lichtleiter kann hierbei wie ein Abstandhalter wirken und sicherstellen, dass die Lichtquelle in ausreichendem Abstand zur Libelle angeordnet werden kann. Hierdurch kann ein geeigneter Einfall des Lichts, beispielsweise mit einem Einfallswinkel von 90°, eine scharfe Abbildung der Position der Gasblase ermöglichen.

Durch die Verbindung der Lichtquelle mit dem Lichtleiter, des Lichtleiters mit der Libelle und der Libelle mit der Lichtsensoreinrichtung kann erreicht werden, dass diese optisch wirksamen Komponenten eine in sich abgeschlossene Einheit bilden. Zur Bildung der abgeschlossenen Einheit können die Komponenten kraftschlüssig oder fest, beispielsweise mittels Klebstoff, miteinander verbunden sein. So kann erreicht werden, dass kein Spalt zwischen den optisch wirksamen Komponenten vorhanden ist, so dass ein geschlossener optischer Pfad entsteht, welches das von der Lichtquelle erzeugte und von der Lichtsensoreinrichtung empfangene Licht durchläuft. Hierdurch werden Verschmutzungen zwischen den optisch wirksamen Komponenten, die die Abbildung der Position der Gasblase auf die Sensoreinrichtung beeinflussen könnten, verhindert. Weiterhin kann so ein zusätzliches Brechen des Lichts der bei einem Übertritt des Lichts in den oder aus dem Spalt, der bei bekannten Neigungsdetektorvorrichtungen auftritt (ohne Verbindung der Komponenten), vermieden werden.

So kann erreicht werden, dass der optische Pfad, durch den das Licht von der Lichtquelle in die Lichtsensoreinrichtung geleitet wird, derart gestaltet sein kann, dass möglichst wenig Übergänge des Lichts zwischen Materialien mit unterschiedlichen Brechungsindizes durchlaufen werden. Zusätzliche Brechungen, welche an den Übergängen auftreten können, können so vermieden werden.

Um eine stabile Verbindung der abgeschlossenen Einheit zu ermöglichen, können die verwendeten Materialien derart gewählt werden, dass sie einen im Wesentlichen gleichen Wärmeausdehnungskoeffizienten aufweisen. So kann erreicht werden, dass die abgeschlossene Einheit auch bei wechselnden Umgebungs- und Betriebstemperaturen abgeschlossen und gegen Verschiebungen und Verschmutzungen geschützt bleibt. Ebenso wird durch die Wahl von Materialien mit im Wesentlichen gleichen Wärmeausdehnungskoeffizienten erreicht, dass die Brechungseigenschaften entlang des optischen Pfads im Wesentlich unveränderlich gut sind, unabhängig von der Umgebungstemperatur bzw. Einsatztemperatur.

In einer Ausführungsform ist die Lichtquelle mit dem Lichtleiter, der Lichtleiter mit der Libelle und die Libelle mit der Lichtsensoreinrichtung durch ein optisches Verbindungsmittel miteinander verbunden. Als optisches Verbindungsmittel kann ein optischer Kleber verwendet werden. Dies kann ein im Wesentlichen transparenter UV-Kleber sein, welcher eine ähnliche Brechzahl wie die Brechzahl des Lichtleiters und/oder wie die Brechzahl der in der Libelle verwendeten Materialien haben kann.

Das optische Verbindungsmittel kann im Wesentlichen den gleichen Wärmeausdehnungskoeffizienten aufweisen wie die optisch wirksamen Komponenten der abgeschlossenen Einheit, um eine stabile Verbindung bei unterschiedlichen Umgebungs- und Betriebstemperaturen zu erreichen und Spannungen durch unterschiedliche Ausdehnungen zu vermeiden. Wie beschrieben, werden dadurch insbesondere auch die Brechungseigenschaften im Wesentlichen temperaturunabhängig.

Durch das optische Verbindungsmittel kann die aus der Lichtquelle, dem Lichtleiter, der Libelle und der Lichtsensoreinrichtung bestehende abgeschlossene Einheit derart verklebt werden, dass nach dem Verkleben eine räumliche Verschiebung der optischen Komponenten zueinander verhindert werden kann. Dies verhindert ein Abweichen und/oder eine Drift eines erzeugten Ausgangssignals. Weiterhin kann durch das Verkleben ein Eindringen von Schmutz permanent verhindert werden.

Weiterhin können mit dem optischen Verbindungsmittel möglicherweise vorhandene Hohlräume ausgefüllt werden. Solche Hohlräume können durch Unebenheiten in den Oberflächen der optischen Komponenten, wie beispielsweise Kratzer oder Fertigungsungenauigkeiten, entstehen. Durch das Ausfüllen der Hohlräume mit dem optischen Verbindungsmittel kann ein ungeplantes Brechen und Reflektieren von Licht innerhalb der abgeschlossenen Einheit verhindert werden. Dies ermöglicht eine scharfe Abbildung der Position der Gasblase auf die Lichtsensoreinrichtung.

Durch ein Verwenden des optischen Verbindungsmittels kann daher ein geschlossener optischer Pfad in der abgeschlossenen Einheit erreicht und permanent sichergestellt werden. Dies ist wichtig, da bei einer Verwendung der Neigungsdetektorvorrichtung in Präzisionsarbeitsgeräten die Position der Gasblase mit einer Genauigkeit von weniger als 10 µm bestimmt werden muss.

In einer bevorzugten Ausführungsform ist zwischen der Libelle und der Lichtquelle eine Blende vorgesehen. Die Blende kann einen definierten Eintritt des durch die Lichtquelle ausgesendeten Lichts in die Libelle ermöglichen. So ist es mit Hilfe der Blende beispielsweise möglich, insbesondere Lichtstrahlen in die Libelle zu leiten, die im Wesentlichen senkrecht auf die Libelle auftreffen, wodurch Reflexionen vermieden werden können.

Die Blende kann beliebig gestaltet sein. Beispielsweise können durch Verwenden einer Blende mit mehreren Schlitzen im Wesentlichen parallele Lichtstrahlen in die Libelle geleitet werden. So ist es möglich, als Lichtquelle zwei LEDs mit gleichem Abstand zu einer Mittelposition anzuordnen, wobei die Mittelposition eine Position der Gasblase bei im Wesentlichen horizontaler Ausrichtung der Libelle beschreibt. Der Abstand zur Mittelposition kann dabei so gewählt werden, dass die Gasblase bei im Wesentlichen horizontaler Ausrichtung der Neigungsdetektorvorrichtung zwischen den Lichtquellen zum Liegen kommt. Durch ein Verwenden einer Blende mit zwei Schlitzen kann erreicht werden, dass zwei im Wesentlichen parallele Lichtstrahlen durch die Libelle geleitet werden. Diese können derart verlaufen, dass sie bei einer im Wesentlichen horizontalen Ausrichtung der Libelle nicht durch die Gasblase geleitet werden, bei einer anderen Neigung der Libelle jedoch durch die Gasblase geleitet werden. Dies ermöglicht ein einfaches Bestimmen der Position der Gasblase.

Die Blende kann beliebig zwischen der Lichtquelle und der Libelle angeordnet sein. Beispielsweise kann sie zwischen der Lichtquelle und dem und dem Lichtleiter, innerhalb des Lichtleiters oder zwischen dem Lichtleiter und der Libelle angeordnet sein.

In einer Variante dieser Ausführungsform weist der Lichtleiter an einer der Libelle zugewandten Seite die Blende auf. In dieser Ausführungsform wirkt der Lichtleiter als Abstandhalter zwischen Lichtquelle und Blende und kann so bewirken, dass durch die Blende definierte Lichtstrahlen in die Libelle geleitet werden.

In einer Variante dieser Ausführungsform ist eine räumliche Ausdehnung des Lichtleiters derart gewählt, dass von der Lichtquelle erzeugte und durch den Lichtleiter in die Libelle geleitete Lichtstrahlen im Wesentlichen parallel sind. In dieser Variante stellt die räumliche Ausdehnung des Lichtleiters zwischen Lichtquelle und Libelle, welche durch eine Dicke des Lichtleiters bestimmt ist, einen der räumlichen Ausdehnung entsprechenden Abstand zwischen Lichtquelle und Libelle sicher. Hierdurch kann ein definierter Eintritt von Lichtstrahlen in die Libelle erreicht werden. Bevorzugt ist die Dicke des Lichtleiters dabei derart gewählt, dass diese in etwa dem sechsfachen Wert der Blende entspricht.

Durch nahezu parallel einfallende Lichtstrahlen ist der mit den Sensoren detektierte Schattenwurf scharf abgebildet und mit einfachen Mittel auswertbar. Mittels einer modifizierten Auswertesoftware ist es aber auch möglich, den komplexeren Fall mit divergierenden Lichtstrahlen zu kompensieren. Hierdurch kann die Dicke des Lichtleiters in einer alternativen Ausführungsform auch reduziert werden, was zu einer verringerten Bautiefe der Neigungsdetektorvorrichtung in dieser Dimension führt. Möglich ist es, die Dicke des Lichtleiters in einer besonders bevorzugten Ausführungsform auf Null zu reduzieren.

In einer Ausführungsform ist die abgeschlossene Einheit im Wesentlichen vollständig von einem Vergussmittel umschlossen.

Als Vergussmittel kann ein beliebiges Material verwendet werden, welches ein Vergießen erlaubt. Beispielsweise kann das Vergussmittel gewählt werden, das im Anschluss an ein Vergießen aushärtet. Verwendet werden können beispielsweise Gips, Keramikmasse oder Gießharz, wobei das Gießharz mit mineralischen Zusätzen vermischt werden kann. Weiterhin ist ein Vergießen auch durch Ausschäumen, beispielsweise mit einem Kunststoffschaum, möglich.

Das Vergussmittel kann im Wesentlichen den gleichen Wärmeausdehnungskoeffizienten aufweisen wie die im Verguss enthaltenen Komponenten, um eine bei wechselnden Betriebs- und Umgebungstemperaturen stabile Verbindung zu erreichen und auftretende Spannungen, die zu Rissen und damit zu Instabilität und Verschmutzungen führen können, zu verhindern.

Vor dem Vergießen kann die Neigungsdetektorvorrichtung an einer Vorrichtung angeordnet und/oder mit dieser verbunden werden, deren Neigung durch die Neigungsdetektorvorrichtung bestimmt und/oder geregelt werden soll. Die Vorrichtung bzw. Einheit kann beispielsweise den Laserkollimator, Servomotoren und/oder weitere Bauteil enthalten. Durch ein Befestigen der Neigungsdetektorvorrichtung an der Vorrichtung vor dem Vergießen kann erreicht werden, dass die Neigungsdetektorvorrichtung mit einer vorbestimmten Ausrichtung an der Vorrichtung befestigt wird. Dadurch kann eine spätere Ausrichtung der Vorrichtung erkannt und/oder eine Justage der Ausrichtung unterstützt werden.

Ebenso können weitere Sensoren, welche direkt mit der Neigungsdetektorvorrichtung in Kontakt stehen oder ebenso an einer Vorrichtung angebracht sind, mit eingegossen und somit untereinander verbunden werden. Die Vorrichtung kann den Laserkollimator oder andere Bauteile eines Präzisionsarbeitsgerätes enthalten. Die weiteren Sensoren sind bevorzugt Temperatursensoren, Beschleunigungsmesser sowie Neigungsmesser für einen anderen Winkelbereich oder eine zweite Neigungsdetektorvorrichtung als Redundanz. Alternativen hierzu sind jedoch ohne weiteres möglich.

Bei dem Vergießen kann auch die Vorrichtung selbst oder Teile davon mit vergossen werden, sie kann also ganz oder teilweise ebenfalls von dem Vergussmittel umhüllt sein. Dies ermöglicht eine stabile Verbindung zwischen der Neigungsdetektorvorrichtung und der Vorrichtung. So kann erreicht werden, dass eine Ausrichtung der Vorrichtung mittels der Neigungsdetektorvorrichtung erkannt und/oder geregelt werden kann.

Durch das Vergießen können die optischen Komponenten der abgeschlossenen Einheit zusätzlich zusammengeschlossen und verbunden werden. Sie können auch nur durch die Vergussmasse zusammengehalten werden, so dass in diesem Fall eine Verbindung mittels Klebstoff entfallen kann. Bei Verwendung von Klebstoff und Vergussmasse kann die abgeschlossene Einheit zusätzlich mechanisch stabilisiert werden. Dies bewirkt eine zusätzliche Fixierung der optischen Komponenten untereinander und erhöht eine Vibrations- und Schockfestigkeit der Einheit. So können Relativbewegungen der Bauteile untereinander noch weiter vermieden werden, so dass das "Driften" des Ausgangssignals der Neigungsdetektorvorrichtung im Wesentlichen verhindert werden kann.

Zudem werden beim Vergießen die enthaltenen Bauteile umhüllt, was einen weiteren Schutz gegen ein Eindringen von Feuchtigkeit, Staub, Fremdkörpern, Wasser usw. darstellen kann.

Durch das Vergießen kann bei entsprechend gewähltem Vergussmittel auch eine elektrische Isolation der Neigungsdetektorvorrichtung erreicht oder verbessert werden und so eine Spannungsfestigkeit erhöht werden. Dies kann dann der Fall sein, wenn die elektronischen Komponenten von dem Vergussmittel umschlossen sind und das Vergussmittel geeignete isolatorische oder wasserabweisende Eigenschaften aufweist.

Das Vergießen der Neigungsdetektorvorrichtung ermöglicht darüber hinaus eine Gestaltung einer Oberfläche der Neigungsdetektorvorrichtung. So kann durch das Vergießen die Neigungsdetektorvorrichtung derart gestaltet werden, dass eine Kopplung mit einer Haltevorrichtung zum Einbau der Neigungsdetektorvorrichtung ermöglicht, erleichtert und/oder stabilisiert wird. So ist es bei einer geeigneten Gestaltung der Oberfläche möglich, in der Haltevorrichtung auf separate Aufnahmen für Einzelkomponenten der Neigungsdetektorvorrichtung zu verzichten. Weiterhin wird durch eine Stabilisierung der Kopplung mit der Haltevorrichtung ein Driften des Ausgangssignals der Neigungsdetektorvorrichtung in Bezug auf Haltevorrichtung vermindert.

In einer Variante dieser Ausführungsform ist das Vergussmittel im Wesentlichen lichtundurchlässig. Ein außerhalb des Vergussmittels vorhandenes Fremdlicht kann in dieser Variante im Wesentlichen nicht in den Lichtleiter, die Libelle oder die Lichtsensoreinrichtung eintreten. Dadurch kann ein geschlossener, gegen Fremdlicht geschützter optischer Pfad erreicht werden. Eine Störung der Abbildung der Gasblase auf die Lichtsensoreinrichtung durch Fremdlicht kann so im Wesentlichen verhindert werden.

In einer Ausführungsform ist eine Einbauvorrichtung zum Einbauen der Lichtquelle und der Lichtsensoreinrichtung vorgesehen. Die Verwendung einer gemeinsamen Einbauvorrichtung dieser elektronischen Komponenten ermöglicht eine einfache Kontaktierung der Lichtquelle und der Lichtsensoreinrichtung. So kann beispielsweise eine Stromversorgung und ein Abgreifen des beispielsweise von der Lichtsensoreinrichtung gelieferten Ausgangssignals der Neigungsdetektorvorrichtung an in der Einbauvorrichtung vorgesehenen Kontakten vorgenommen werden.

Die Einbauvorrichtung kann darüber hinaus als Träger zum Einbauen der Lichtquelle und der Lichtsensoreinrichtung gestaltet sein. So kann ein zusätzliches mechanisches Stabilisieren der abgeschlossenen Einheit erreicht werden.

Als Einbauvorrichtung kann ein Flex-Print verwendet werden, welcher einen flexiblen Kunststoffträger mit elektrischen Leitern für mehrere elektrische Verbindungen bereitstellen kann. In dem Flex-Print können die Lichtquelle und die Lichtsensoreinrichtung einfach eingelötet werden. Mit Hilfe des Flex-Prints können die elektronischen Kontakte einfach aus der mit dem Vergussmittel umschlossenen abgeschlossenen Einheit herausgeführt werden, was eine elektrische Kontaktierung der elektronischen Komponenten der Neigungsdetektorvorrichtung ermöglicht.

Ein Präzisionsarbeitsgerät gemäß einer weiteren Ausführungsform der Erfindung weist eine neigbar gelagerte Vorrichtung auf. Eine Neigung der Vorrichtung ist auf Basis einer Neigungsdetektorvorrichtung, wie zuvor beschrieben, bestimmbar und/oder regelbar. So kann die Neigungsdetektorvorrichtung eine Neigung der Vorrichtung erkennen und signalisieren, so dass ein Justieren der Neigung der Vorrichtung, wie beispielsweise ein horizontales Ausrichten, ermöglicht wird. Weiterhin kann durch das Erkennen der Neigung durch die Neigungsdetektorvorrichtung ein automatisches Regeln der Neigung der Vorrichtung vorgenommen werden.

In einer Ausführungsform ist das Präzisionsarbeitsgerät ein Rotationsbaulaser und die Vorrichtung eine drehbar gelagerte Umlenkvorrichtung zum Umlenken eines Laserlichts, welches von einer separat von der Umlenkvorrichtung angeordneten oder mit der Umlenkvorrichtung verbundenen Laserlichtquelle erzeugt sein kann. In dieser Ausführungsform ermöglicht die Neigungsdetektorvorrichtung ein Einstellen einer vorgegebenen Neigung der Umlenkvorrichtung, so dass Lasermarkierungen mit der vorgegebenen Neigung auf Oberflächen von Gegenständen, welche den Rotationsbaulaser unmittelbar umgeben, erzeugt werden können.

In einer Variante dieser Ausführungsform ist ein Laserkollimator vorgesehen. Mit Hilfe des Laserkollimators kann Laserlicht mit einem definierten, beispielsweise parallelen Strahlenverlauf erzeugt und/oder ausgesendet werden.

Der Laserkollimator kann (zusammen mit anderen Bauteilen) als Teil einer mittels einer Lagereinrichtung neigbar gelagerten Vorrichtung in dem Rotationsbaulaser angeordnet sein. Die neigbar gelagerte Vorrichtung kann einen oder mehrere Servomotoren aufweisen. Durch die Servomotoren kann eine Kraft gegen eine an einem Gehäuse des Rotationsbaulasers befestigte Platte erzeugt werden. Durch die Wirkung der Kraft kann eine Neigung der neigbar gelagerten Vorrichtung und damit des Laserkollimators in Bezug auf die Platte geändert werden. So kann eine Ausrichtung des Strahlenverlaufs des durch den Laserkollimator erzeugten Laserlichts erreicht werden.

An dem Laserkollimator können beispielsweise zwei Neigungsdetektorvorrichtungen mit unterschiedlicher Ausrichtung der Längsachsen der jeweiligen Libellen angeordnet sein. Die Neigungsdetektorvorrichtungen können derart an dem Laserkollimator befestigt sein, dass die Längsachsen im Wesentlichen senkrecht zu dem Strahlenverlauf des von dem Laserkollimator ausgesendeten Laserlicht ausgerichtet sind.

Der Laserkollimator kann zusammen mit den Neigungsdetektorvorrichtungen ganz oder teilweise in das Vergussmittel eingebettet sein. Beispielsweise kann eine untere Seite und/oder eine obere Seite des Laserkollimators aus dem Vergussmittel herausragen.

Das gemeinsame Vergießen des Laserkollimators mit einer oder mehreren Neigungsdetektorvorrichtungen ermöglicht eine stabile Kopplung des Laserkollimators mit den Neigungsdetektorvorrichtungen und damit ein Erkennen, Regeln und/oder Justieren einer Ausrichtung des Strahlenverlaufs des Laserlichts auf Basis eines Ausgangssignals die Neigungsdetektorvorrichtung.

Eine Ausrichtung bzw. Neigung des Laserkollimators kann mit Hilfe an dem Laserkollimator angeordneten bzw. mit dem Laserkollimator vergossenen Neigungsdetektorvorrichtungen justiert werden. In der Regel erfolgt vor der Justage eine Grobeinstellung, beispielsweise von einer Bedienperson. Dies kann beispielsweise von Hand unter Zuhilfenahme von zusätzlichen, von außen sichtbaren am Rotationsbaulaser angebrachten Libellen erfolgen. Anschließend kann die Bedienperson eine automatische Justage einleiten, bei der die neigbar gelagerte Vorrichtung mit dem Laserkollimator beispielsweise mittels der Servomotoren und der Lagereinrichtung fein eingestellt (justiert) wird. Die automatische Justage kann auf Basis des Ausgangssignals der mit dem Laserkollimator angeordneten Neigungsdetektorvorrichtungen vorgenommen werden.

Durch den Verguss kann ein Driften der Ausrichtung des erzeugten Laserlichts in Bezug auf ein Signal des Sensors weitgehend vermieden werden.

So kann langfristig ein stabiles Ausrichten des durch den Rotationsbaulaser projizierten Laserlichts auf Basis eines Signals der Neigungsdetektorvorrichtung, beispielsweise über die Lebensdauer des Rotationsbaulasers, erreicht werden. Das Einbetten erhöht somit eine Robustheit des Rotationsbaulasers über seine Lebenszeit.

Ein Verfahren zur Herstellung einer Neigungsdetektorvorrichtung mit einer Lichtquelle, einem Lichtleiter, einer Libelle und einer Lichtsensorvorrichtung umfasst ein Verbinden der Lichtquelle mit dem Lichtleiter und des Lichtleiters mit der Libelle und der Libelle mit der Lichtsensoreinrichtung durch ein optisches Verbindungsmittel. Das Verfahren ermöglicht so, dass Lichtquelle, Lichtleiter, Libelle und Lichtsensoreinrichtung eine abgeschlossene Einheit bilden.

Das Verbinden der abgeschlossenen Einheit kann in einer Fertigung mit hohen Sauberkeitsanforderungen, beispielsweise unter Reinraumbedingungen, durchgeführt werden. So kann erreicht werden, dass Verschmutzungen in der abgeschlossenen Einheit verhindert werden. Weiterhin wird so eine räumliche Fixierung der Komponenten der abgeschlossenen Einheit untereinander erreicht.

Nach dem Verbinden der abgeschlossenen Einheit ist diese durch das optische Verbindungsmittel gegen Verschmutzungen im Wesentlichen geschützt. Es ist daher möglich, im weiteren Verfahren die Sauberkeitsanforderungen herabzusetzen. Weiterhin können Vorsichtsmaßnahmen zum Verhindern von räumlichen Verschiebungen der Komponenten der abgeschlossenen Einheit untereinander unterbleiben, da die räumliche Fixierung ein Verschieben erschwert oder verhindert. Dies ermöglicht eine kostengünstige Gestaltung des weiteren Verfahrens.

Eine Ausführungsform des Herstellungsverfahrens umfasst weiterhin ein Vergießen der Lichtquelle, des Lichtleiters, der Libelle und der Lichtsensoreinrichtung mit einem Vergussmittel. Durch das Vergießen können die vergossenen Komponenten zusätzlich und mit verstärkter Festigkeit untereinander fixiert und gegen die Umgebung abgeschlossen werden. Im weiteren Verlauf des Verfahrens kann vorausgesetzt werden, dass die vergossenen Komponenten fest miteinander verbunden sind und einen optisch abgeschlossen Pfad bilden. Es sind daher keine weiteren Vorsichtsmaßnahmen, die ein Verschieben der optischen Komponenten untereinander oder ein Verschmutzen verhindern sollen, notwendig, und der Herstellprozess kann kostengünstig gestaltet werden.

In einer weiteren Ausführungsform des Verfahrens zur Herstellung einer Neigungsdetektorvorrichtung kann die abgeschlossene Einheit an einem Laserkollimator befestigt werden. Hierzu kann die abgeschlossene Einheit geeignet, beispielsweise mit einer Ausrichtung der Längsachse der Libelle senkrecht zur Ausrichtung eines vom Laserkollimator erzeugbaren Strahls, an dem Laserkollimator angeordnet und beispielsweise mit diesem verklebt werden.

In einer Variante dieser Ausführungsform kann der Laserkollimator mit der daran befestigten abgeschlossenen Einheit mit einem Vergussmittel vergossen werden. So kann eine stabile Kopplung des Laserkollimators mit den daran angeordneten Neigungsdetektorvorrichtungen erreicht werden.

Diese und weitere Merkmale der Erfindung werden nachfolgend anhand von Beispielen und unter Zuhilfenahme der begleitenden Figuren näher erläutert. Es zeigen:
- **Fig. 1**: schematisch ein Ausführungsbeispiel einer Neigungsdetektorvorrichtung;
- **Fig. 2**: schematisch eine Vorrichtung zum Erzeugen von Laserlicht mit zwei Ausführungsbeispielen von Neigungsdetektorvorrichtungen; und
- **Fig. 3**: schematisch eine Variante eines Einbaus einer Vorrichtung zum Erzeugen und/oder Sammeln von Laserlicht in einem Rotationsbaulaser.

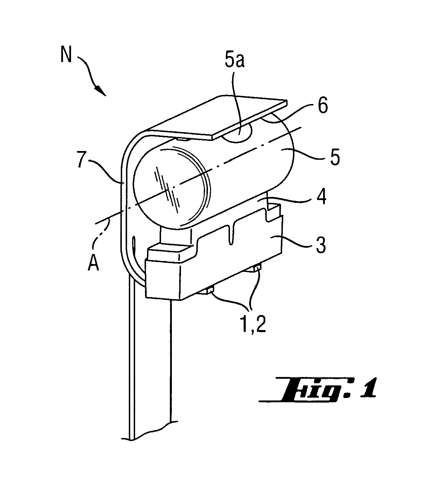

In Fig. 1 wird eine Neigungsdetektorvorrichtung N gezeigt, deren Lichtquelle durch zwei LEDs 1, 2 gebildet wird.

Das von den LEDs 1, 2 erzeugte Licht wird in einen aus einem Lichtleiter bestehenden Abstandhalter 3 geleitet. Durch eine Blende 4 werden Lichtstrahlen der LEDs 1, 2 mit definiertem, beispielsweise im Wesentlichen parallelem Verlauf und definiertem, beispielsweise im Wesentlichen senkrechtem Einfallswinkel in eine Libelle 5 geleitet.

Die Libelle 5 ist mit einer Füllflüssigkeit gefüllt und weist eine Gasblase 5a auf, welche sich je nach Neigung der Libelle in Bezug auf eine Längsachse A jeweils anders positioniert.

Durch die in die Libelle 5 geleiteten Lichtstrahlen wird eine Abbildung des Inneren der Libelle 5 und insbesondere der Position der Gasblase 5a auf Linearsensoren 6 erzeugt, welche auf einer den LEDs 1, 2 gegenüberliegenden Seite der Libelle angeordnet sind.

Eine Stromversorgung der LEDs 1, 2 und der Linearsensoren 6 wird über ein Flex-Print 7 erreicht, welches auch ein durch die Linearsensoren 6 erzeugtes Ausgangssignal beispielsweise zu einer Auswertungsvorrichtung leiten kann.

Die Neigungsdetektorvorrichtung N kann im Wesentlichen vollständig von einem Vergussmittel (nicht dargestellt) umschlossen sein. Lediglich am Flex-Print 7 vorgesehene Kontakte können zugänglich bleiben und eine elektrische Kontaktierung der elektronischen Komponenten ermöglichen.

Die in Fig. 1 gezeigte Neigungsdetektorvorrichtung ermöglicht es, mit einem geschlossenen optischen Pfad zwischen den LEDs 1, 2 und den Linearsensoren 6 die Position der Gasblase 5a der Libelle 5 zu erfassen. Durch den geschlossenen optischen Pfad werden Störungen, beispielsweise durch Verschmutzungen von Oberflächen der Komponenten oder Verschiebungen der Komponenten untereinander verhindert.

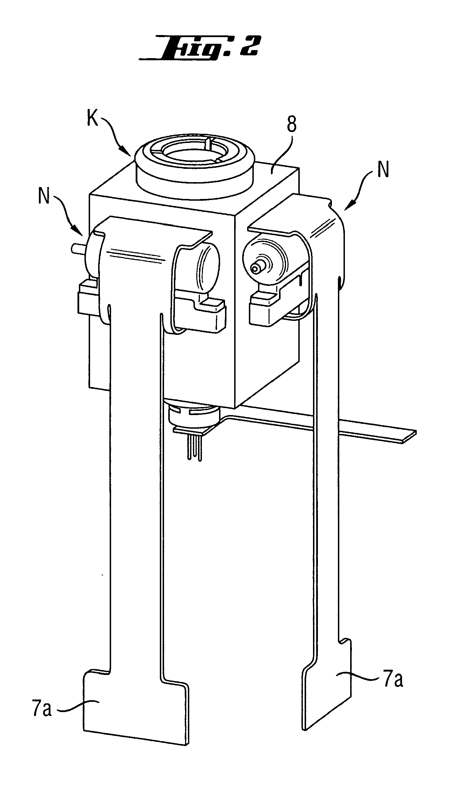

In Fig. 2 ist schematisch eine Anordnung von zwei Neigungsdetektorvorrichtungen N an einem Laserkollimator K zum Erzeugen und/oder Sammeln von Laserlicht gezeigt. Die Neigungsdetektorvorrichtungen N sind an einem Gehäuse 8 des Laserkollimators K angeordnet. Durch Kontaktlaschen 7a und 7b der Flex-Prints 7 der Neigungsdetektorvorrichtungen N können die durch die Neigungsdetektorvorrichtungen N bestimmten Neigungswinkel abgegriffen werden.

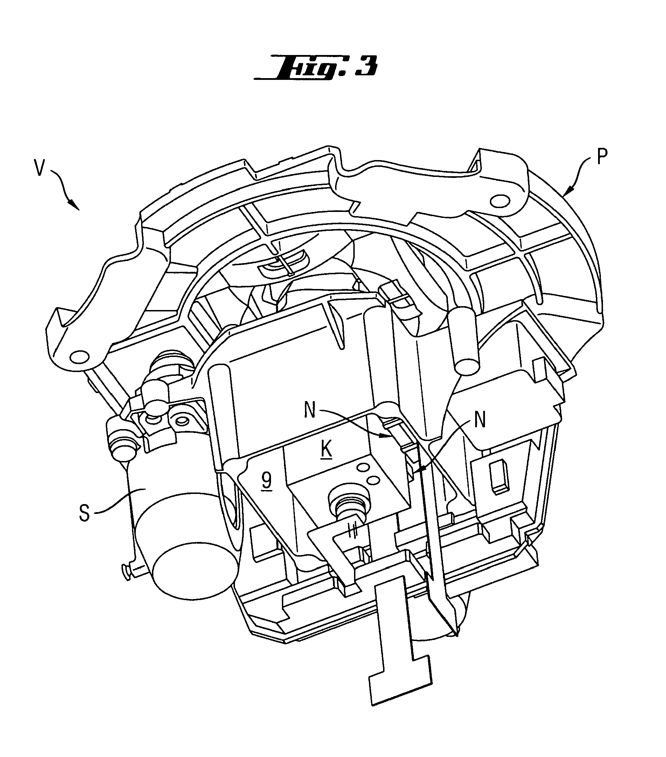

Fig. 3 illustriert schematisch den Einbau der in Fig. 2 gezeigten Anordnung in eine neigbar gelagerte Vorrichtung V eines Rotationsbaulasers (nicht dargestellt). Die Vorrichtung V ist in einer Lagereinrichtung neigbar gegen eine an einem Gehäuse des Rotationsbaulasers befestigte Platte P gelagert. Die Vorrichtung V kann mit Hilfe eines Servomotors S gegen die Platte P verschoben bzw. geneigt werden.

In der Vorrichtung V ist eine Kavität 9 vorgesehen, in welcher der Laserkollimator K mit den seitlich angeordneten Neigungsdetektorvorrichtungen N angeordnet werden kann. In der Kavität 9 kann der Laserkollimator K mit den seitlich daran angeordneten Neigungsdetektorvorrichtungen N mit einer Vergussmasse (nicht dargestellt) wie beispielsweise Gips eingegossen werden. So kann eine stabile Verbindung des Laserkollimators K mit den Neigungsdetektoren N in der neigbar gelagerte Vorrichtung V des Rotationsbaulasers erreicht werden. Die Verbindung ermöglicht eine Justage der Neigung der Vorrichtung V gegen die Platte P auf Basis eines Ausgangssignals der Neigungsdetektoren N. Gleichzeitig wird durch das Vergießen ein robuster, gegen mechanische Schocks unempfindlicher und verschmutzungsimmuner Einbau der Neigungsdetektorvorrichtungen N mit dem Laserkollimator K in die neigbar gelagerte Vorrichtung V des Rotationsbaulasers erreicht.

## Patentansprüche

1. Neigungsdetektorvorrichtung (N) mit:
einer Lichtquelle (1,2);
einer Lichtsensoreinrichtung (6);
einer Libelle (5), die zwischen der Lichtquelle (1, 2) und der Lichtsensoreinrichtung (6) angeordnet ist; und
einem Lichtleiter (3), der zwischen der Lichtquelle (1, 2) und der Libelle (5) angeordnet ist;
wobei die Lichtquelle (1,2) mit dem Lichtleiter (3), der Lichtleiter (3) mit der Libelle (5) und die Libelle (5) mit der Lichtsensoreinrichtung (6) jeweils derart miteinander verbunden sind, dass Lichtquelle (1, 2), Lichtleiter (3), Libelle (5) und Lichtsensoreinrichtung (6) eine abgeschlossene Einheit bilden.

2. Neigungsdetektorvorrichtung (N) nach Anspruch 1, wobei die Lichtquelle (1, 2) mit dem Lichtleiter (3) und der Lichtleiter (3) mit der Libelle (5) und die Libelle (5) mit der Lichtsensoreinrichtung (6) durch ein optisches Verbindungsmittel miteinander verbunden sind.

3. Neigungsdetektorvorrichtung (N) nach Anspruch 1 oder 2, wobei zwischen der Libelle (5) und der Lichtquelle (1, 2) eine Blende (4) vorgesehen ist.

4. Neigungsdetektorvorrichtung (N) nach Anspruch 1 oder 2, wobei der Lichtleiter (3) an einer der Libelle (5) zugewandten Seite eine Blende (4) aufweist.

5. Neigungsdetektorvorrichtung (N) nach einem der vorstehenden Ansprüche, wobei eine räumliche Ausdehnung des Lichtleiters (3) derart gewählt ist, dass von der Lichtquelle (1, 2) erzeugte und durch den Lichtleiter (3) in die Libelle (5) geleitete Lichtstrahlen im Wesentlichen parallel sind.

6. Neigungsdetektorvorrichtung (N) nach einem der vorstehenden Ansprüche, wobei die abgeschlossene Einheit im Wesentlichen vollständig von einem Vergussmittel umschlossen ist.

7. Neigungsdetektorvorrichtung (N) nach Anspruch 6, wobei das Vergussmittel im Wesentlichen lichtundurchlässig ist.

8. Neigungsdetektorvorrichtung (N) nach einem der vorstehenden Ansprüche, wobei eine Einbauvorrichtung (7) zum Einbauen der Lichtquelle (1, 2) und der Lichtsensoreinrichtung (6) vorgesehen ist.

9. Präzisionsarbeitsgerät mit einer neigbar gelagerten Vorrichtung (V), wobei eine Neigung der Vorrichtung (V) auf Basis einer Neigungsdetektorvorrichtung (N) nach einem der vorstehenden Ansprüche bestimmbar und/oder regelbar ist.

10. Präzisionsarbeitsgerät nach Anspruch 9, wobei das Präzisionsarbeitsgerät ein Rotationsbaulaser ist und die Vorrichtung (V) eine drehbar gelagerte Belichtungsvorrichtung zum Aussenden von Laserlicht aufweist.

11. Präzisionsarbeitsgerät nach Anspruch 10, wobei ein Laserkollimator (K) in das Vergussmittel (8) eingebettet ist.

12. Verfahren zur Herstellung einer Neigungsdetektorvorrichtung (N) mit einer Lichtquelle (1, 2), einem Lichtleiter (3), einer Libelle (5) und einer Lichtsensorvorrichtung (6), umfassend:
Verbinden der Lichtquelle (1, 2) mit dem Lichtleiter (3) und des Lichtleiters (3) mit der Libelle (5) und der Libelle (5) mit der Lichtsensoreinrichtung (6) durch ein optisches Verbindungsmittel.

13. Verfahren zur Herstellung einer Neigungsdetektorvorrichtung (N) nach Anspruch 12, umfassend:
Vergießen der Lichtquelle (1, 2), des Lichtleiters (3), der Libelle (5) und der Lichtsensoreinrichtung (6) mit einem Vergussmittel.

14. Verfahren zur Herstellung einer Neigungsdetektorvorrichtung (N) nach Anspruch 12,
wobei die Lichtquelle (1, 2), der Lichtleiter (3), die Libelle (5) und die Lichtsensoreinrichtung (6) durch das Verbinden zu einer abgeschlossenen Einheit verbunden werden, und das Verfahren weiterhin umfasst:
Befestigen der abgeschlossenen Einheit an einem Laserkollimator (K).

15. Verfahren zur Herstellung einer Neigungsdetektorvorrichtung (N) nach Anspruch 14, umfassend:
Vergießen des Laserkollimators (K) und der abgeschlossenen Einheit mit einem Vergussmittel.
